# EUROPÄISCHE PATENTSCHRIFT

(11) **EP 3 227 237 B1**
(45) Veröffentlichungstag und Bekanntmachung des Hinweises auf die Patenterteilung: **06.03.2019**
(21) Anmeldenummer: 16738656.4
(22) Anmeldetag: 05.05.2016
(51) Int. Cl.: C02F 1/32

(54) **VORRICHTUNG UND DEREN VERWENDUNG ZUR UV-BEHANDLUNG VON FLUIDEN**
DEVICE AND USE THEREOF FOR THE UV TREATMENT OF FLUIDS
DISPOSITIF ET SON APPLICATION POUR LE TRAITEMENT UV DE FLUIDES

(30) Priorität: 17.09.2015 DE 102015115713
(43) Veröffentlichungstag der Anmeldung: 11.10.2017
(73) Patentinhaber: Hytecon AG, 6006 Luzern (CH)
(72) Erfinder: KOLCH, Andreas Manfred, 32052 Herford (DE); PAULSMEYER, Dirk, 32423 Minden (DE); XU, Hongbin, 22149 Hamburg (DE)
(74) Vertreter: Bittner, Thomas L.
(86) Internationale Anmeldenummer: PCT/DE2016/100204
(87) Internationale Veröffentlichungsnummer: WO 2017/045662

(56) Entgegenhaltungen:
- EP-A1- 2 829 518
- CN-A- 102 219 289
- CN-Y- 201 362 628
- US-A1- 2014 030 144

## Beschreibung

Die Erfindung betrifft eine Vorrichtung und deren Verwendung zur Behandlung von Fluiden, wie Flüssigkeiten oder Gasen, gemäß den Oberbegriffen der Patentansprüche 1 und 15.

### Hintergrund

Es ist ein Fluidreinigungssystem bekannt, WO 2014 171 886 A1, welches auf Strahlungsquellen mit UV-LEDs basiert, welche jedoch um ein Rohr herum angeordnet sind, was den Nachteil mit sich bringt, dass durch das Rohr hindurchfließendes Fluid nur einmal an jeder Strahlungsquelle vorbeifließen kann, selbst wenn die Strömung turbulent ausgebildet ist, sodass für eine ausreichend große Reinigungswirkung eine Vielzahl von Strahlungsquellen hintereinander und mehrseitig am Umfang des Rohres verteilt angeordnet werden müssen.

Das Dokument US 2014 030 144 A1 betrifft eine Vorrichtung und ein Verfahren zur Luftsterilisation und -desinfektion mit einem Elektronik - und Steuermodul, einer Einrichtung zum Ansaugen von Luft aus der Umgebung in die Vorrichtung, einer Luftführungskammer und einem Gehäuse. Die Einrichtung zum Ansaugen von Luft aus der Umgebung in die Vorrichtung mobilisiert latente Krankheitserreger in der Umgebung und zieht sie zur Sterilisation und Desinfektion in die Vorrichtung. Die Luftführungskammer sorgt dafür, dass die luftgetragenen Krankheitserreger UV-Strahlung über UV-LEDs mit einer ausreichenden Dosis ausgesetzt werden, um die Zellwände zu durchdringen und die Pathogene zu zerstören. Das Elektronik- und Steuermodul versorgt die Vorrichtung und koppelt mit den elektronischen Komponenten.

Das Dokument CN 201 362 628 Y offenbart eine Umkehrosmose-Membran-Wasserbehandlungsvorrichtung zum Schutz gegen mikrobielle Kontamination, die ein Wasserreservoir, eine Rohwasserpumpe, einen Sandfilter, einen Aktivkohlefilter, einen Weichmacher, einen Kartuschenfilter, eine Hochdruckpumpe, eine Umkehrosmosemembran und einen Produktwassertank umfasst. Bei der Wasserbehandlungsvorrichtung ist ein Sterilisator zwischen dem Kartuschenfilter und der Hochdruckpumpe angeordnet. Da der Sterilisator mit Zusammenwirkung von ultraviolettem Licht und anorganischen antibakteriellen Komponenten zwischen dem Kartuschenfilter und der Hochdruckpumpe nach dem Stand der Technik angeordnet ist, können Mikroorganismen im Rohwasser nach der Primärbehandlung durch Anwendung der Zusammenwirkung des ultravioletten Lichts und der anorganischen antibakteriellen Komponenten abgetötet werden, wodurch der Gehalt der Mikroorganismen in dem Wasser, das aus einem spiralförmigen sterilisierenden Röhrenauslass ausströmt, enorm verringert wird, die Kontamination der Mikroorganismen der Umkehrosmosemembran verringert wird, die Lebensdauer der Umkehrosmosemembran verlängert wird, die Herstellungskosten von Wasserprodukten gesenkt werden und die Qualität der Wasserprodukte verbessert.

Das Dokument EP 2 829 518 A1 betrifft ein tragbares Wasserreinigungssystem mittels UV-LEDs. Das tragbare Wasserreinigungssystem umfasst ein Trägerelement; eine Vielzahl von LEDs, die auf der Oberfläche des Trägerelements angebracht sind; ein festes Filter, das mit einem Durchgang versehen ist, in den das Trägerelement eingeführt wird; und eine Abdeckung, die an einem Ende des festen Filters angebracht ist, um den Durchgang des festen Filters abzudichten.

### Zusammenfassung

Aufgabe der Erfindung ist es, eine Vorrichtung und deren Verwendung zur Behandlung von Fluiden zur Verfügung zu stellen, die die gleiche oder eine verbesserte Reinigungsleistung mit erheblich geringerem technischen Aufwand erzielen und dabei einen beträchtlich geringeren Bauraum und eine reduzierte elektrische Leistung beanspruchen.

Zur Lösung ist eine Vorrichtung nach Anspruch 1 geschaffen. Anspruch 15 betrifft die Verwendung der Vorrichtung.

Die vorteilhafte Ausgestaltung eines Durchflussgehäuses der Vorrichtung mit einem darin erzeugten Fluidstrudel erzielt gegenüber einer prinzipiell benötigten Durchflusszeit eines Fluides vom Einlass zum Auslass eine deutlich erhöhte Aufenthaltszeit in dem Reaktorraum, sodass den einzelnen Fluidbestandteilen hierdurch eine deutlich erhöhte UV-Dosis applizierbar ist.

Die vorliegende Konstruktion nutzt also nicht die Reflektion der UV-Strahlung an den Innenwänden des Reaktors als entscheidendes Element ihrer Funktion, deren Wirkung natürlich gleichfalls vorhanden und die auch konstruktiv optimiert genutzt wird, sondern sie zielt insbesondere darauf ab, das Fluid möglichst oft und nahe in die wirksamste Einstrahlungszone in dem Reaktorraum, möglichst nah an den Strahlungsquellen vorbei zu befördern, was mittels des zwischen dem Eintritt und Austritt aus dem Reaktorraum erzeugten rotierenden Fluidstrudel einfach und wirkungsvoll verwirklicht wird.

Weitere vorteilhafte Ausgestaltungen des Gegenstandes der Erfindung ergeben sich mit und in Kombination der Unteransprüchen.

Entsprechend einem nicht erfindungsgemäßen Beispiel besteht die strömungstechnische Ausgestaltung aus im Einlass und/ oder im Auslass angeordneten Einbauten in Form von Fluidleitflächen, sodass bei einer Konstruktion, bei der das Wasser beispielsweise nach einem Eintritt von unten zunächst um einen Winkel von 90° horizontal entlang einer unteren Innenwand und dann an einer vertikalen Seitenwand nach oben, dort entlang der Unterseite eines Deckels und dann weiter bis zur gegenüberliegenden Seitenwand, von dort nach unten und zurück horizontal, parallel zur umgelenkten Eintrittsrichtung des Fluides geführt wird, wo es sich mit neu hinzukommendem Fluid vermischt, wodurch eine Rotation des Fluides um eine horizontale Achse erzwungen wird, bevor das Fluid an einer Kante einer im Auslass angeordneten Fluidleitfläche um 180° entgegen der tangentialen Hauptströmungsrichtung des Fluidstrudels herumfließen und den Reaktorraum rechtwinklig zum Einlass durch den Auslass verlassen kann.

Bei einer Ausführungsform mit einem zylindrischen Reaktorraum und beliebiger, beispielsweise zylindrischer oder kubischer Außenform des Durchflussgehäuses sind im Einlass Fluidleitflächen vorgesehen, die das Fluid in Bodennähe tangential einströmen lassen, sodass auch hier wieder eine Rotation erzwungen wird, wobei im Auslass eine als Rohr ausgebildete Fluidleitfläche im Zentrum des Reaktorraumes angeordnet ist, welches sich in Richtung auf die Strahlungsquellen erstreckt und davor endet, durch welches das Fluid nach mehreren Umwirbelungen hindurch abfließen kann.

Der Reaktorraum der Vorrichtung wird dabei von einem Deckel abgedeckt, der parallel oder tangential zur Umfangsfläche des Fluidstrudels seitlich oder von oben auf dem Durchflussgehäuse angeordnet ist, wobei die Strahlungsquellen in dem einfach abzunehmenden Deckel festgelegt sind, wodurch diese gut erreichbar und zu Wartungszwecken leicht auszutauschen und/ oder zu reinigen sind. Hierzu sind das Dichtungsgehäuse und der Deckel vorteilhafterweise mit gegenseitigen Außen- und Innengewinden sowie Dichtungen und Dichtflächen versehen, sodass sie druckdicht miteinander verschraubbar ausgebildet sind.

Gemäß einer besonders bevorzugten Ausgestaltung des Gegenstandes der Erfindung sind einige oder mehrere Strahlungsquellen auf einzelnen Steckkarten angeordnet, die beispielsweise etwa die Größe von SD-Karten aufweisen können, wobei im Deckel und ggf. zusätzlich im Durchflussgehäuse Steckplätze für solche Steckkarten vorgesehen sind, die mit Kontakten für eine Stromversorgung der Strahlungsquellen ausgestattet sind, sodass ein Auswechseln oder Anpassen der Strahlungsquellen mit anderen Leistungsdaten oder Wellenlängen einfach vonstattengehen kann.

Vorteilhafterweise sind mindestens die strömungstechnischen Ausgestaltungen oder auch andere Teile der Oberfläche des Reaktorraumes aus Aluminium, PTFE oder Titandioxid oder aber damit beschichtet, sodass in dem Reaktorraum zusätzlich eine fotokatalytische Selbstreinigung erfolgen kann, wodurch das Erfordernis einer oftmaligen Reinigung entfällt bzw. ansonsten erforderliche Reinigungsintervalle wesentlich verlängert werden können.

Bei einer weiteren bevorzugten Ausführungsform der Erfindung ist im Reaktorraum mindestens ein Messsensor zur Messung von Fluidqualitätsparametern angeordnet, sodass beispielsweise die erzielten Desinfektionswerte abgelesen und ggf. Strahlungsquellen ab- oder hinzugeschaltet werden können, sodass auf die zugeführte Wasserqualität reagiert und auch die einzusetzende Energie wirtschaftlicher verwandt werden kann, ohne auf Grund unnötig hoher Strahlungsdosen bei durchströmenden sauberen Fluiden wirkungslos verschwendet zu werden.

Weiterhin können solche Messsensoren vorteilhaft mit einer computergesteuerten Haustechnik vernetzt sein, sodass beispielsweise die UV-Strahlungsquellen mit oder auch ohne aktiven Fluiddurchfluss und mit konstanten, unterschiedlichen oder wechselnden Strahlungsleistungen in Betrieb gesetzt werden können, etwa um einem Legionellenwachstum gezielt entgegenzuwirken.

Besonders vorteilhaft ist das Durchflussgehäuse äußerlich in Form eines Kubus oder eines Zylinders ausgebildet, sodass zur Leistungssteigerung auf einfache Art und Weise mehrere identische Kuben oder Zylinder und/-oder zur Erweiterung der Fluidaufbereitung Kuben bzw. Zylinder mit anderen Aufbereitungselementen wie Aktivkohle, PartikelfiLtern oder Ionenaustauschern zu Quadern oder aneinandergereiten Zylindern größerer Länge oder Höhe miteinander kombinierbar sind.

Entsprechend einer besonders bevorzugten Ausgestaltung der erfinderischen Vorrichtung ist diese unmittelbar unter- oder übertisch vor oder an einer Endverbrauchsstelle, etwa einer Trinkwasserentnahmestelle am "Point-of-Use" (POU), also an einem Wasserhahn, angeordnet, oder besonders bevorzugt sogar als Teil einer Auslassarmatur ausgebildet, als sodass ein Endverbraucher sicher sein kann, das entnommene und frisch entkeimte Wasser unbedenklich trinken zu können.

Vorteilhaft ist des Weiteren, dass die Vorrichtung einen Anschluss zum Eintrag von Wasserstoffperoxid oder Ozon aufweisen kann, um weitere Behandlungsschritte an dem hindurchfließenden Fluid durchführen zu können.

Bei einer vorteilhaften Ausgestaltung der Erfindung ist auf einer nach oben und/ oder außen gerichteten freien Oberfläche des Durchflussgehäuses oder des Deckels eine Solarzelle angeordnet, sodass die Vorrichtung auch ohne externe Stromversorgung funktioniert, wobei es von weiterem Vorteil ist, dass im Durchflussgehäuse und/-oder im Deckel mindestens ein elektrischer Energiespeicher zur Energieversorgung der Strahlungsquellen angeordnet sein kann, mittels dessen die Vorrichtung auch nachts funktionstüchtig gehalten werden kann. Eine im Durchflussgehäuses und/-oder im Deckel angeordnete Anzeigevorrichtung sorgt vorteilhafterweise für die Information des Benutzers über den Betriebszustand der Vorrichtung, ob diese etwa gerade fremdversorgt oder batteriebetrieben ist oder in welchem Ladezustand sich die Akkus befinden.

Insgesamt lässt sich die beschriebene Vorrichtung dazu verwenden ein vorteilhaftes Verfahren zu Behandlung von Fluiden durchführen, bei dem dem Fluid im Reaktorraum eine Strudelbewegung aufgeprägt und das Fluid vor Erreichen des Auslasses mehrfach nah an den Strahlungsquellen vorbeigeführt wird, sodass bereits eine geringe Anzahl von leistungsstarken Strahlungsquellen ausreicht, um
etwa eine gewünschte Qualität einer Desinfektion, beispielsweise ein weitgehendes Abtöten von Bakterien, Viren und Parasiten erzielen zu können.

Nachfolgend ist ein Ausführungsbeispiel der Erfindung anhand von einer Zeichnung näher beschrieben. Es zeigt:
- Fig. 1: eine Prinzipskizze eines nicht erfindungsgemäßen Beispiels im Schnitt,
- Fig. 2: eine Prinzipskizze einer Ausführungsform im Schnitt,
- Fig. 3: eine Prinzipskizze der Vorrichtung mit Solarzelle und Akku im Teilschnitt, und
- Fig. 4: eine Prinzipskizze der in einer Auslaufarmatur integrierten Vorrichtung.

Die gezeigte Vorrichtung zur Behandlung von Fluiden besteht aus einem hier kubischen oder zylindrischen, aber auch quaderförmigen oder in beliebiger äusserer Raumform ausführbaren Durchflussgehäuse 1;11 mit einem Deckel 2;12, sowie mit einem Einlass 3;13 von unten und in dem nicht erfindungsgemäßen Beispiel einem dagegen um 90° abgewinkelten Auslass 6 oder in der Ausführungsform mit einem nach unten gerichteten Auslass 16 und Innenwänden 5;15, wobei im Deckel 2;12 nach innen in den Reaktorraum 4;14 gerichtete UV-LED-Strahlungsquellen 7 im Fluid angeordnet sind, die auf Steckkarten 11 platziert sind, die einzeln ausgetauscht und nur beispielsweise mit 24 x 32 x 2 mm etwa die Größe von aktuell gängigen SD-Karten aufweisen.

Hinter dem Einlass 3;13 und vor dem Auslass 6;16 ist die Vorrichtung mit Fluidleitflächen 9,10;19;20 ausgestattet, die im Reaktorraum 4 des nicht erfindungsgemäßen Beispiels einen horizontal liegenden Fluidstrudel 8 und im Reaktorraum 14 der Ausführungsform einen vertikalen Fluidstrudel 18 erzeugen, wobei das Fluid selber flüssig oder gasförmig sein kann und als Flüssigkeit vorzugsweise Trinkwasser vorgesehen ist, aber auch andere flüssige Lebensmittel, Kosmetika oder ölhaltige Medien behandelt werden
können, ebenso wie als gasförmige Fluide wie Abluft, Zuluft oder Umgebungsluft, die insbesondere desinfiziert werden.

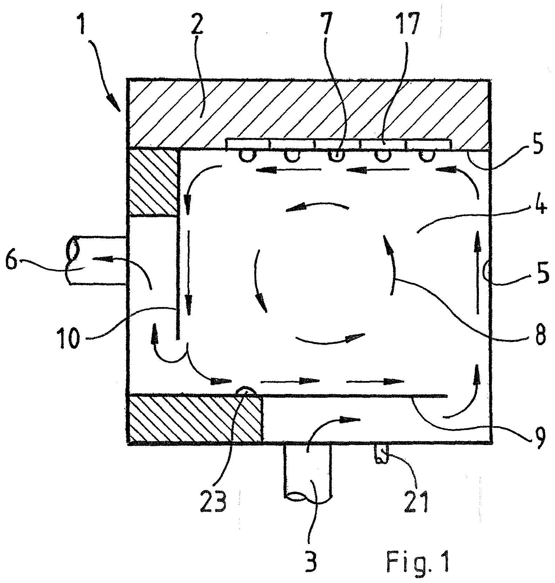

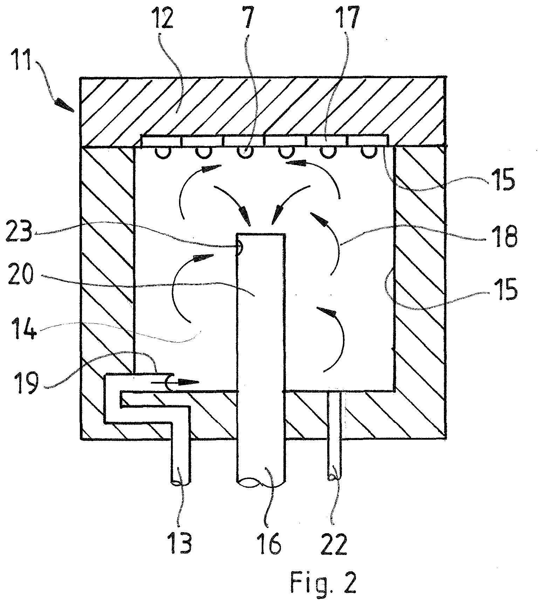

Bei einem vertikal liegenden Fluidstrudel 8 des in Fig. 1 dargestellten, nicht erfindungsgemäßen Beispiels mit einer Fluidentnahme quer zu dessen Drehachse, ist es ebenso denkbar, eine Fluidentnahme auch koaxial in Richtung einer Drehachse des Fluidstrudels 8 durchzuführen, wie sie etwa für die Ausführungsform in Figur 2 dargestellt ist, wobei die Entnahme, wie sie in Figur 1 dargestellt ist, über die vor dem Auslass 6 angeordnete Fluidleitfläche 10 aus einem tangential bzw. parallel zur Innenwand 5 fließenden Teil des Fluidstrudels 8 erfolgt und davon um 180° umgeleitet wird, um anschließend erneut um 90° zurück in den Auslass 6 abgeleitet zu werden.

Bei dem zylindrischen Reaktorraum 14 der Ausführungsform wird das Fluid über eine Fluidleitfläche 19 im Bodenbereich tangential eingespeist und ein vertikaler Fluidstrudel 18 erzeugt, der um ein im Zentrum des Fluidstrudels axial angeordnetes rohrförmiges Fluidleitblech 20 herumwirbelt und das Fluid erst im oberen Bereich dort hindurch in den Abfluss 16 leitet, zuvor aber mehrfach unter den im Deckel 12, direkt in dem Fluid platzierten und stirnseitig in den Reaktorraum 14 einstrahlenden UV-Strahlungsquellen vorbeibewegt wird. Auch hier sind alternativ oder zusätzliche radial oder auch von der entgegengesetzten Stirnseite her einstrahlende UV-Strahlungsquellen einsetzbar, aber zeichnerisch nicht dargestellt.

Die strömungstechnischen Ausgestaltungen in Form von Fluidleitflächen 9;10;19;20 können dabei als einfache Einsätze in das als Kubus oder Zylinder ausgeführte Durchflussgehäuse 1;11 ausgestaltet sein, die aus Aluminium, PTFE oder Titandioxid bestehen oder aber damit beschichtet sind.

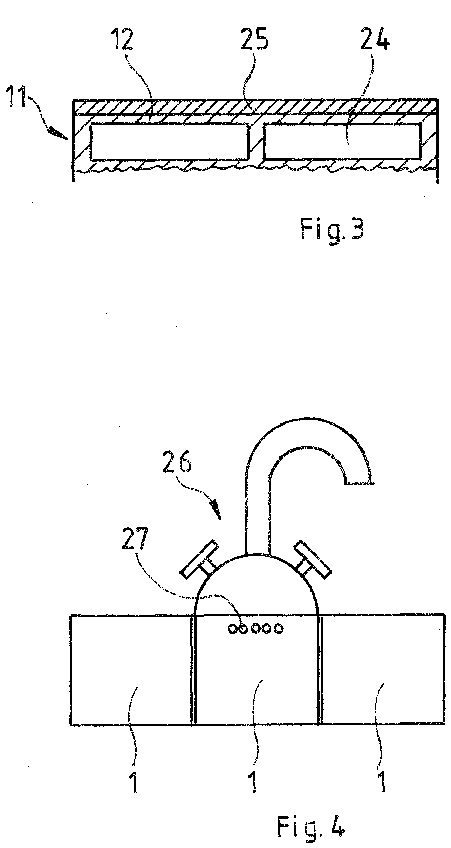

Durch die 90° Anordnung von Einlass 3 und Auslass 4 für das Fluid des Durchflussgehäuses 1 des Beispiels können mehrere Kuben miteinander kombiniert werden, etwa um die Menge des zu behandelnden Fluides zu vergrößern und/-oder um verschiedene Behandlungsschritte zu kombinieren, wobei
z.B. Kuben mit Aktivkohle- oder Partikelfiltern hintereinander in Reihe geschaltet werden können, wie dies in Fig. 4 dargestellt ist. Das Durchflussgehäuse 1 der erfinderischen Vorrichtung bildet dann einen Hauptkubus, der mit einer Stromversorgung ausgestattet ist, an dem weitere Kuben angeschlossen werden können, die keinen eigenen Stromanschluss benötigen.

Ebenso lassen sich mehrere aktive Durchflussgehäuse 1;11 hintereinander oder nebeneinander anordnen, wobei die der Ausführungsform zwar zylinderförmige Reaktorräume 14 besitzen, aber ebenfalls kubus- oder quaderförmige Aussenabmessungen und darin entsprechend geführte Einlässe 13 und Auslässe 16 aufweisen können, sodass auch die Durchflussgehäuse 11 der Ausführungsform miteinander oder mit anderen Durchflussgehäusen ergänzender Behandlungsschritte zusammengesetzt werden können.

Der Deckel 2;12 eines Durchflussgehäuse 1;11 ist, wie in Fig. 3 gezeigt, auf einer nach oben gerichteten freien Oberfläche mit einer Solarzelle 25 versehen, ebenso wie im Deckel 2;12 elektrische Energiespeicher zur Energieversorgung der Strahlungsquellen 7 angeordnet sind.

Fig. 4 zeigt eine Kombination von drei übertisch anzuordnenden Durchflussgehäusen 1;11 mit in einem Durchflussgehäuse 1;11 angeordneter Anzeigevorrichtung 27 für den Betriebszustand der Vorrichtung.

## Patentansprüche

1. Vorrichtung zur Behandlung von Fluiden wie Flüssigkeiten oder Gasen aus einem Durchflussgehäuse (11) mit einem Deckel (12), einem Einlass (13), einem Reaktorraum (14) mit Innenwänden (15) und einem Auslass (16) und mit in den Reaktorraum (14) gerichteten UV-LED-Strahlungsquellen (7), sowie mit einer Stromversorgung dafür,
**dadurch gekennzeichnet, dass**
- der Reaktorraum (14) aus einem zylindrischen Innenraum mit ihn umgebenden Innenwänden (15) besteht,
- ihr Deckel (12) den zylindrischen Reaktorraum (14) abdeckt, der auf oder am Durchflussgehäuse (11) angeordnet ist,
- die Strahlungsquellen (7) an oder in dem Deckel (12) festgelegt sind, der Teilwände der Innenfläche (15) bildet und
- der zylindrische Innenraum mit einer strömungstechnischen Ausgestaltung mit Fluidleitflächen (19) im Einlass (13), die das Fluid in Bodennähe tangential einströmen lassen, und mit einem im Zentrum des Reaktorraumes (14) angeordneten Rohr (20) als Auslass (16) versehen ist, welches sich in Richtung auf die Strahlungsquellen (7) erstreckt und davor endet, wodurch einem durchströmenden Fluid von der strömungstechnischen Ausgestaltung ein rotierender Fluidstrudel (18) aufprägbar ist, die Strahlungsquellen (7) seitlich einstrahlen könnend ausgerichtet sind, sodass mindestens ein Teilstrom des Fluides im Fluidstrudel (18) vor Verlassen des Reaktorraumes (14) mehrfach an den Strahlungsquellen (7) vorbeiführbar ist.

2. Vorrichtung nach einem der vorgenannten Ansprüche, **dadurch gekennzeichnet, dass** eine oder mehrere Strahlungsquellen (7) auf einzelnen Steckkarten (17) angeordnet sind.

3. Vorrichtung nach Anspruch 2, **dadurch gekennzeichnet, dass** im Deckel (12) Steckplätze für die Steckkarten (17) vorgesehen und die Steckplätze mit Kontakten für die Stromversorgung der Strahlungsquellen (7) ausgestattet sind.

4. Vorrichtung nach einem der vorgenannten Ansprüche, **dadurch gekennzeichnet, dass** das Durchflussgehäuse (11) und der Deckel (12) über gegenseitige Außen- und Innengewinde sowie Dichtungen und Dichtflächen verfügen und miteinander druck- und flüssigkeitsdicht verschraubt sind.

5. Vorrichtung nach einem der vorgenannten Ansprüche, **dadurch gekennzeichnet, dass** mindestens die strömungstechnischen Ausgestaltungen oder auch andere Teile der Oberfläche des Reaktorraumes (14) aus Aluminium, PTFE oder Titandioxid bestehen oder damit beschichtet sind, wodurch im Betrieb eine andauernde fotokatalytische Selbstreinigung erzeugbar ist.

6. Vorrichtung nach einem der vorgenannten Ansprüche, **dadurch gekennzeichnet, dass** im Reaktorraum (14) Messsensoren (23) zur Messung von Fluidqualitätsparametern angeordnet sind.

7. Vorrichtung nach Anspruch 6, **dadurch gekennzeichnet, dass** die Messsensoren (23) mit einer computergesteuerten Haustechnik verbunden sind und von der die UV-Strahlungsquellen mit oder ohne aktiven Fluiddurchfluss mit konstanten, unterschiedlichen oder wechselnden Strahlungsintensitäten in Betrieb setzbar sind.

8. Vorrichtung nach einem der vorgenannten Ansprüche, **dadurch gekennzeichnet, dass** das Durchflussgehäuse (11) äußerlich in Form eines Kubus oder eines Zylinders ausgebildet.

9. Vorrichtung nach Anspruch 8, **dadurch gekennzeichnet, dass** zur Leistungssteigerung mehrere identische Kuben oder Zylinder und/oder zur Erweiterung der Fluidaufbereitung Kuben oder Zylinder mit anderen Aufbereitungselementen wie Aktivkohle, Partikelfiltern oder Ionenaustauschern zu Quadern oder Zylindern größerer Länge/Höhe miteinander kombiniert sind.

10. Vorrichtung nach einem der vorgenannten Ansprüche, **dadurch gekennzeichnet, dass** sie unter- oder übertisch unmittelbar vor oder an einer Endverbrauchsstelle einer Trinkwasserentnahmestelle am "Point-of-Use" (POU) oder angeordnet oder als Teil einer Auslassarmatur (26) ist.

11. Vorrichtung nach einem der vorgenannten Ansprüche, **dadurch gekennzeichnet, dass** sie einen Anschluss (22) zum Eintrag von Fluidbearbeitungsstoffen wie Wasserstoffperoxid oder Ozon aufweist.

12. Vorrichtung nach einem der vorgenannten Ansprüche, **dadurch gekennzeichnet, dass** auf einer nach oben und/ oder außen gerichteten freien Oberfläche des Durchflussgehäuses (11) oder Deckels (12) eine Solarzelle (25) angeordnet ist.

13. Vorrichtung nach einem der vorgenannten Ansprüche, **dadurch gekennzeichnet, dass** im Durchflussgehäuses (11) und/ oder im Deckel (12) mindestens ein elektrischer Energiespeicher zur Energieversorgung der Strahlungsquellen (7) angeordnet ist.

14. Vorrichtung nach einem der vorgenannten Ansprüche, **dadurch gekennzeichnet, dass** im Durchflussgehäuses (11) und/ oder im Deckel (12) Anzeigevorrichtung für den Betriebszustand der Vorrichtung angeordnet sind.

15. Verwendung der Vorrichtung zur Behandlung von Fluiden gemäß einem der vorgenannten Ansprüche, **dadurch gekennzeichnet, dass** dem Fluid in dem Reaktorraum (14) eine Strudelbewegung aufgeprägt wird und dass zumindest eine Teilmenge des Fluides vor Erreichen des Auslasses (16) mehrfach an den Strahlungsquellen (7) vorbeigeführt wird.

## Claims

1. A device for the treatment of fluids such as liquids or gases, formed by a flow housing (11) with a cover (12), an inlet (13), a reactor chamber (14) with interior walls (15) and an outlet (16), and with UV LED light sources (7) directed into the reactor chamber (14), as well as a power supply therefor,
**characterized in that**
- the reactor chamber (14) consists of a cylindrical interior chamber with interior walls (15) surrounding it,
- its cover (12) covers the cylindrical reactor chamber (14), which is disposed over or on the flow housing (11),
- the light sources (7) are fixed on or in the cover (12) which forms partial walls of the interior surface (15), and
- the cylindrical interior chamber is provided with a fluidic configuration with fluid guide surfaces (19) in the inlet (13) which allows the fluid to flow in tangentially close to the floor, and which is provided with a tube (20) disposed in the centre of the reactor chamber (14) as the outlet (16), which extends in the direction towards the light sources (7) and ends in front of them, whereupon a fluid that passes through is provided with a rotating fluid vortex (18) by the fluidic configuration, the light sources (7) are orientated to allow the irradiation to be lateral, so that at least a portion of the flow of the fluid in the fluid vortex (18) can pass by the light sources (7) several times before leaving the reactor chamber (14).

2. The device as claimed in one of the preceding claims, **characterized in that** one or more light sources (7) are disposed on individual slot cards (17).

3. The device as claimed in claim 2, **characterized in that** slots for the slot cards (17) are provided in the cover (12) and the slots are equipped with contacts to supply power to the light sources (7).

4. The device as claimed in one of the preceding claims, **characterized in that** the flow housing (11) and the cover (12) are provided with mating external and internal threads as well as seals and sealing surfaces and are screwed together in a pressure- and fluid-tight manner.

5. The device as claimed in one of the preceding claims, **characterized in that** at least the fluidic configurations or also other parts of the surface of the reactor chamber (14) consist of aluminium, PTFE or titanium dioxide or are coated therewith, whereupon in operation, permanent photocatalytic self-cleaning can be carried out.

6. The device as claimed in one of the preceding claims, **characterized in that** measuring sensors (23) are disposed in the reactor chamber (14) in order to measure fluid quality parameters.

7. The device as claimed in claim 6, **characterized in that** the measuring sensors (23) are linked to computer-controlled home technology from which the UV light sources, with or without active fluid flow, can be set with constant, varying or alternating irradiation intensities.

8. The device as claimed in one of the preceding claims, **characterized in that** the external shape of the flow housing (11) is that of a cuboid or a cylinder.

9. The device as claimed in claim 8, **characterized in that**, in order to increase the performance, a plurality of identical cuboids or cylinders and/or in order to broaden the fluid treatment, cuboids or cylinders can be combined together with other treatment elements such as activated charcoal, particle filters or ion exchangers to form cuboids or cylinders with a larger length/height.

10. The device as claimed in one of the preceding claims, **characterized in that** it is undercounter or overcounter, immediately before or at an end consumer location of a drinking water dispensing point at the "point of use" (POU), or is disposed with or a part of an outlet fitting (26).

11. The device as claimed in one of the preceding claims, **characterized in that** it comprises a connector (22) for the introduction of fluid processing substances such as hydrogen peroxide or ozone.

12. The device as claimed in one of the preceding claims, **characterized in that** a solar cell (25) is disposed on an upwardly and/or outwardly directed free surface of the flow housing (11) or cover (12).

13. The device as claimed in one of the preceding claims, **characterized in that** at least one electrical energy storage device is disposed in the flow housing (11) and/or in the cover (12) to supply the light sources (7) with power.

14. The device as claimed in one of the preceding claims, **characterized in that** display devices to display the operating status of the device are disposed in the flow housing (11) and/or in the cover (12).

15. Use of the device for the treatment of fluids as claimed in one of the preceding claims, **characterized in that** the fluid in the reactor chamber (14) is provided with a vortex motion and **in that** at least a portion of the fluid is guided past the light sources (7) several times before reaching the outlet (16).

## Revendications

1. Dispositif, destiné au traitement de fluides, tels que des liquides ou des gaz, composé d'un boîtier de débit (11) pourvu d'un couvercle (12), d'une entrée (13), d'une chambre de réacteur (14) pourvue de parois intérieures (15) et d'une sortie (16) et pourvu de sources de rayonnement UV-DEL (7), orientées dans la chambre de réacteur (14), ainsi que d'une alimentation électrique pour ces dernières,
**caractérisé en ce que**
- la chambre de réacteur (14) est composée d'un espace intérieur cylindrique pourvu de parois intérieures (15) qui l'entourent,
- son couvercle (12) recouvre la chambre de réacteur (14) cylindrique qui est placée sur le dessus ou sur le boîtier de débit (11),
- les sources de rayonnement (7) sont immobilisées sur ou dans le couvercle (12), qui forme des parois partielles de la surface intérieure (15) et
- l'espace intérieur cylindrique est doté d'une conception relevant de la technique des fluides, pourvue de surfaces de guidage des fluides (19) dans l'entrée (13), qui laissent affluer tangentiellement le fluide à proximité du fond inférieur et pourvue d'un tube (20) placé au centre de la chambre de réacteur (14), faisant office de sortie (16), qui s'étend dans la direction vers les sources de rayonnement (7) et qui se termine avec ces dernières, à travers lequel un tourbillon de fluide (18) en rotation est applicable par la conception relevant de la technique des fluides à un fluide traversant, les sources de rayonnement (7) sont orientées en étant susceptibles d'irradier latéralement, de sorte qu'au moins un courant partiel du fluide puisse être dirigé plusieurs fois à l'avant des sources de rayonnement (7), dans le tourbillon de fluide (18), avant de quitter la chambre de réacteur (14).

2. Dispositif selon l'une quelconque des revendications précédemment citées, **caractérisé en ce qu'**une ou plusieurs sources de rayonnement (7) sont placées sur des cartes enfichables (17) individuelles.

3. Dispositif selon la revendication 2, **caractérisé en ce que** dans le couvercle (12) sont prévus des logements d'enfichage pour les cartes enfichables (17) et **en ce que** les logements d'enfichage sont équipés de contacts pour l'alimentation électrique des sources de rayonnement (7).

4. Dispositif selon l'une quelconque des revendications précédemment citées, **caractérisé en ce que** le boîtier de débit (11) et le couvercle (12) disposent de filetages et de taraudages réciproques, ainsi que de joints d'étanchéité et de surfaces d'étanchéité et sont vissés l'un à l'autre de manière étanche à la pression et aux liquides.

5. Dispositif selon l'une quelconque des revendications précédemment citées, **caractérisé en ce qu'**au moins les conceptions relevant de la technique fluidique ou également d'autres parties de la surface de la chambre de réacteur (14) sont en aluminium, en PTFE ou en oxyde de titane ou en sont revêtues, suite à quoi, en fonctionnement, un auto-nettoyage photo-catalytique constant peut être généré.

6. Dispositif selon l'une quelconque des revendications précédemment citées, **caractérisé en ce que** dans la chambre de réacteur (14) sont placés des capteurs de mesure (23), destinés à mesurer des paramètres qualitatifs du fluide.

7. Dispositif selon la revendication 6, **caractérisé en ce que** les capteurs de mesure (23) sont reliés avec une domotique commandée par ordinateur et par laquelle les sources de rayonnement UV sont susceptibles d'être mises en fonctionnement, avec ou sans débit actif de fluide avec des intensités de rayonnement constantes, différentes ou variables.

8. Dispositif selon l'une quelconque des revendications précédemment citées, **caractérisé en ce que** le boîtier de débit (11) est conçu extérieurement sous la forme d'un cube ou d'un cylindre.

9. Dispositif selon la revendication 8, **caractérisé en ce que** pour augmenter la puissance, plusieurs cubes ou cylindres identiques et/ou pour étendre le traitement de fluide, des cubes ou des cylindres sont associés les uns avec les autres, avec d'autres éléments de traitement, tels que du charbon actif, des filtres à particules ou des échangeurs ioniques en parallélépipèdes ou en cylindres de longueur/hauteur plus grande.

10. Dispositif selon l'une quelconque des revendications précédemment citées, **caractérisé en ce qu'**il est placé sous ou sur un plan de de travail, à l'avant de ou sur un point de consommation final d'un poste de soutirage d'eau potable sur le « Point-of-Use » (POU) ou **en ce qu'**il est placé ou une partie d'une robinetterie distributrice (26).

11. Dispositif selon l'une quelconque des revendications précédemment citées, **caractérisé en ce qu'**il comporte un raccordement (22), destiné à introduire des substances de traitement du fluide, telles que du peroxyde d'hydrogène ou de l'ozone.

12. Dispositif selon l'une quelconque des revendications précédemment citées, **caractérisé en ce que** sur une surface libre, orientée vers le haut et/ou vers le bas du boîtier de débit (11) ou du couvercle (12) est placée une cellule photovoltaïque (25).

13. Dispositif selon l'une quelconque des revendications précédemment citées, **caractérisé en ce que** dans le boîtier de débit (11) et/ou dans le couvercle (12) est placé au moins un accumulateur d'énergie électrique, pour l'alimentation en énergie des sources de rayonnement (7).

14. Dispositif selon l'une quelconque des revendications précédemment citées, **caractérisé en ce que** dans le boîtier de débit (11) et/ou dans le couvercle (12) est placé un dispositif d'affichage de l'état de service du dispositif.

15. Utilisation du dispositif destiné au traitement de fluides selon l'une quelconque des revendications précédemment citées, **caractérisé en ce que** dans la chambre de réacteur (14), il est appliqué au fluide un mouvement de tourbillon et **en ce qu'**on fait passer au moins une quantité partielle du fluide à plusieurs reprises devant les sources de rayonnement (7), avant l'atteinte la sortie (16).
